# EUROPÄISCHE PATENTANMELDUNG

(11) **EP 1 221 800 A2**
(43) Veröffentlichungstag der Anmeldung: **10.07.2002**
(21) Anmeldenummer: 02000124.4
(22) Anmeldetag: 03.01.2002
(51) Int. Cl.: H04M 1/725, G11B 31/00, H04M 11/10

(54) **Diktiervorrichtung**

(30) Priorität: 04.01.2001 DE 20100105 U
(71) Anmelder: Dosch & Amand GmbH & Co. KG, 81679 München (DE)
(72) Erfinder: Dosch, Franz, 83026 Rosenheim (DE)
(74) Vertreter: Grünecker, Kinkeldey, Stockmair & Schwanhäusser Anwaltssozietät

(57) **Zusammenfassung**

Erfindungsgemäß wird eine Diktiervorrichtung bereitgestellt, die ein Handgerät mit einem Mikrophon zur Wandlung eines akustischen Sprachsignals in ein elektrisches Sprachsignal und eine Sprachverarbeitungseinrichtung zur Verarbeitung des elektrischen Sprachsignals umfasst. Das Handgerät verfügt über eine Sendeeinheit und die Sprachverarbeitungseinrichtung über eine Empfangseinheit, die eine schnurlose Übertragung des elektrischen Sprachsignals vom Handgerät zur Sprachverarbeitungseinrichtung gestatten. Es können Standard-DECT-Telefone und Standard-Computereinheiten verwendet werden, wodurch sich ein kostengünstiges und komfortables Einzel- und Mehrbenutzersystem mit zentraler Speicherung und Verarbeitung ergibt.

## Beschreibung

Die Erfindung betrifft allgemein eine Diktiervorrichtung und befasst sich im besonderen mit solchen Diktiervorrichtungen, die ein Handgerät mit Mikrophon zur Wandlung eines akustischen Sprachsignals in ein elektrisches Sprachsignal und eine Sprachverarbeitungseinrichtung zur Verarbeitung des elektrischen Sprachsignals umfassen, zum Zwecke der automatischen Speicherung, Texterstellung und Ausgabe.

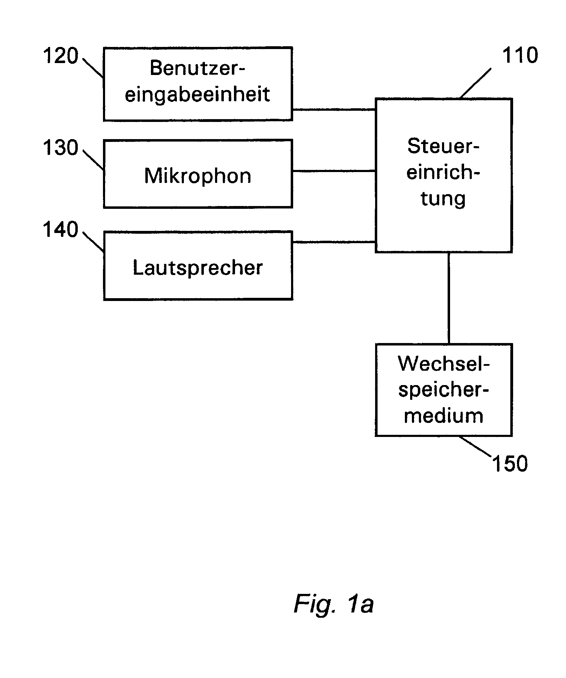

Im Stand der Technik sind verschiedenartige Diktiergeräte vorbekannt. FIG. 1a zeigt ein Hand- oder Tischdiktiergerät, mit dem das Diktat zur nachträglichen Verarbeitung aufgenommen werden kann. Zu diesem Zweck umfasst das Diktiergerät ein mit einer Steuereinrichtung 110 verbundenes Mikrophon 130. Abhängig von Benutzereingaben, die durch die Benutzereingabeeinheit 120 empfangen werden, werden die Sprachsignale auf einem Wechselspeichermedium 150 abgelegt. Das Wechselspeichermedium 150 kann ein analoges Medium wie etwa eine Sprachkassette sein, es können jedoch auch digitale Speichermedien Verwendung finden. Ein übliches Diktiergerät umfasst ferner einen Lautsprecher 140 zur Kontrollausgabe des gesprochenen Diktats an den Benutzer.

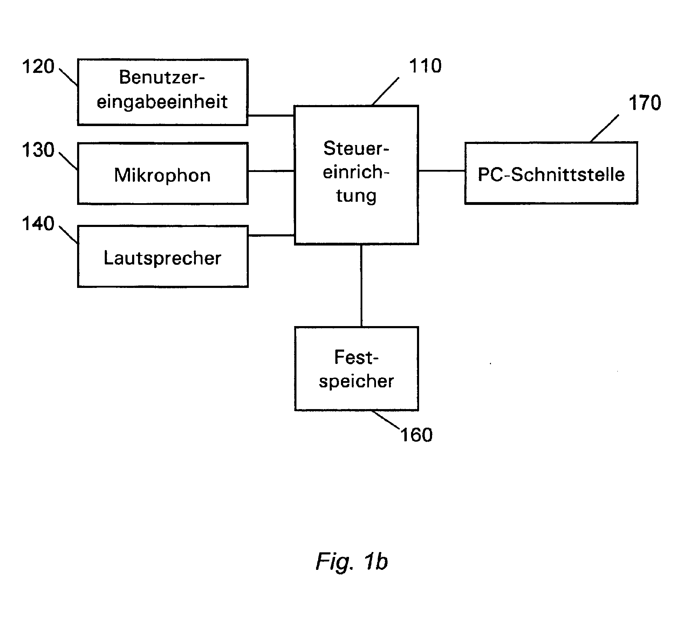

Neben der analogen und digitalen Speicherung der Sprachsignale auf Wechselspeichermedien 150 sind auch Diktiergeräte bekannt, die die aufgenommenen Sprachsignale über eine PC-Schnittstelle 170 an einen Personalcomputer weiterleiten können, so dass das Auswechseln der Sprachkassette etc. entfällt (FIG. 1b). Solche Diktiergeräte verfügen in der Regel zusätzlich über einen Festspeicher 160, um einen Betrieb selbst dann zu ermöglichen, wenn Daten über die PC-Schnittstelle 170 nicht gesendet werden können.

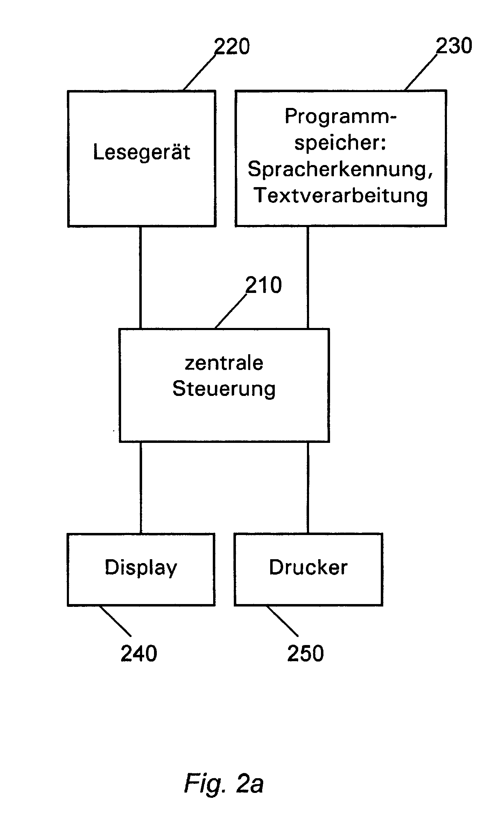

Ist das gesprochene Diktat aufgenommen, so erfolgt die Nachbearbeitung. Diese kann bereits im Stand der Technik automatisch durch einen Computer erfolgen. Wie aus FIG. 2a ersichtlich, verfügt der Computer neben einer zentralen Steuerung 210, einem Display 240 und einem Drucker 250 über ein Lesegerät 220 zur Aufnahme des Wechselspeichermediums 150. Die vom Speichermedium gelesenen Sprachdaten werden dann von der zentralen Steuerung 210 einer Spracherkennung und Textverarbeitung gemäß dem im Speicher 230 abgelegten Programmcode unterworfen. Der sich ergebende lesbare Fließtext wird dann am Display 240 und/oder am Drucker 250 ausgegeben.

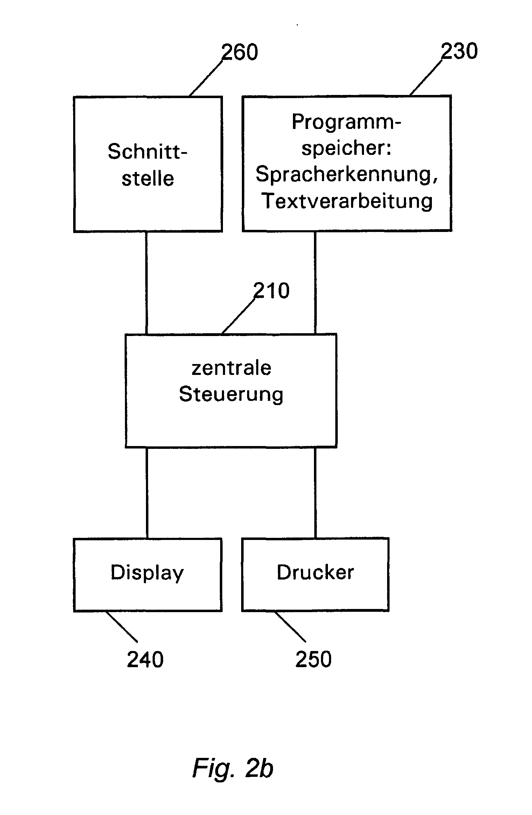

Werden die Sprachdaten statt auf einem Wechselspeichermedium 150 in einem Festspeicher 160 abgelegt, wie dies in FIG. 1b gezeigt ist, müssen die Daten über die PC-Schnittstelle 170 an den Computer weitergeleitet werden. Der Computer umfasst dann anstelle des Lesegeräts 220 ebenfalls eine Schnittstelle 260 in Entsprechung zur PC-Schnittstelle 170 (FIG. 2b).

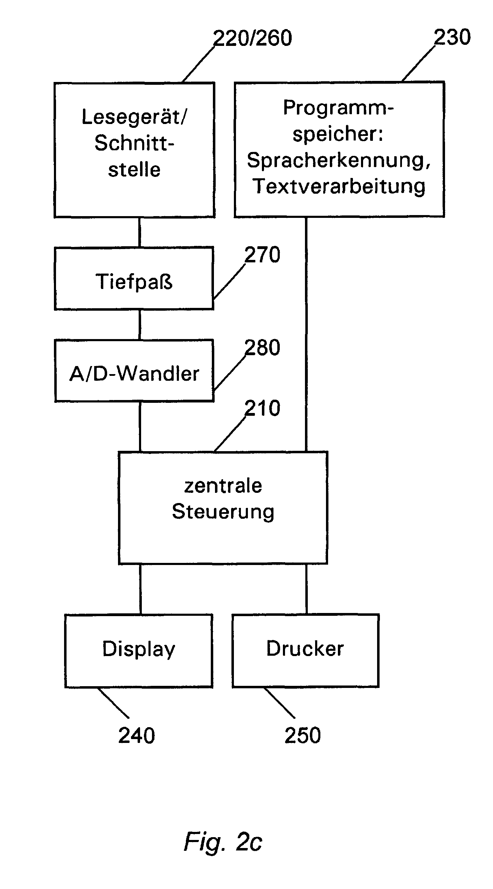

Wie bereits erwähnt, können die Sprachdaten analog oder digital abgespeichert werden. Im Falle einer Übermittlung analoger Daten an den Computer umfasst dieser daher, wie in FIG. 2c dargestellt, zusätzlich eine Analog/Digital-Wandlereinrichtung 280 mit typischerweise 8 Bit Auflösung zur Wandlung des analogen Sprachsignals in ein digitales Signal von 8*8 kHz = 64 kHz bei einer 8 kHz-Abtastung. Vor der Wandlung wird das Sprachsignal mit einem 3,2 kHz-Tiefpass 270 gefiltert.

Die beschriebenen herkömmlichen Hand- und Tischdiktiergeräte weisen zahlreiche Nachteile auf. Da mit ihnen eine Spracherkennung und automatische Textverarbeitung nur mit nachträglicher Überspielung des Sprachsignals an den Computer möglich sind, stellt sich der Weg vom gesprochenen Diktat am Bildschirm zum am Bildschirm und/oder am Drucker ausgegebenen bzw. auf einer Festplatte etc. gespeicherten Fließtext als zweistufig dar. In einer ersten Stufe spricht der Benutzer sein Diktat und speichert es ab. Nach der Überspielung an den PC erfolgt in der zweiten Stufe die Verarbeitung des Sprachsignals. Somit ergibt sich zum einen eine Verzögerung, da die Sprachverarbeitung erst beginnen kann, wenn das letzte gesprochene Wort des Diktats gespeichert und überspielt ist. Femer hat der Benutzer während des Diktats ausschließlich die Möglichkeit, die abgespeicherten Sprachsignale mittels des Lautsprechers 140 abzufragen; er hat jedoch keine Kontrollmöglichkeit über die Spracherkennung und Textverarbeitung.

Sind die beschriebenen herkömmlichen Diktiergeräte als Tischgeräte ausgeführt, so kommt der zusätzliche Nachteil der Standortgebundenheit hinzu. Ein Diktat kann dann nur am jeweiligen Standort des Diktiergeräts aufgenommen werden.

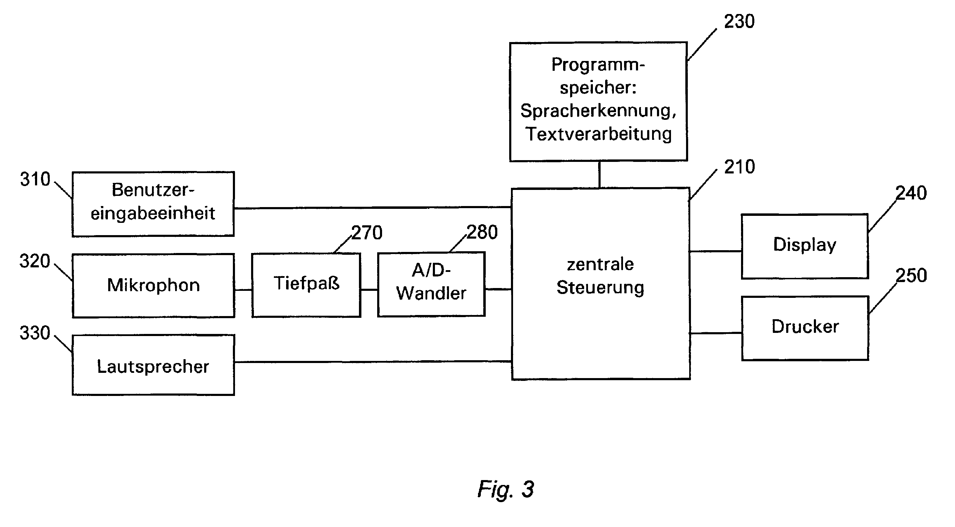

Neben den beschriebenen Hand- und Tischdiktiergeräten können im Stand der Technik auch Personalcomputer direkt zum Diktieren verwendet werden. Wie in FIG. 3 gezeigt, umfasst ein solcher Computer ein Mikrophon 320 sowie einen Lautsprecher 330, die üblicherweise als PC-Karte ausgeführt sind. Die Karte umfasst ferner einen Tiefpass 270 und einen Analog/Digital-Wandler 280 für die oben erwähnte Umwandlung in ein digitales Signal. Der PC umfasst ferner eine Benutzereingabeeinheit 310, üblicherweise eine Tastatur und eine Maus.

Mit einer Diktiereinrichtung, wie der in FIG. 3 dargestellten, kann der Anwender die Texte in das PC-eigene Mikrophon oder ein über eine A/D-Wandlerkarte angeschlossenes externes Mikrophon sprechen, wobei das gesprochene Signal dann automatisch einer Texterstellung unterworfen wird. Allerdings ist auch diese Diktiereinrichtung nachteilig, da der Benutzer an den Standort des PCs gebunden ist, weil er nur vor Ort und nur direkt mit dem Personalcomputer Texte diktieren kann. Dies hat des weiteren den Nachteil eines hohen Hardwareaufwandes, da für jeden diktierenden Anwender ein vollständig mit Spracherkennung und Textverarbeitung ausgerüsteter Personalcomputer notwendig ist.

Die DE 198 20 814 A1 beschreibt ein Diktiersystem mit einer Mikrophoneinheit und einem Computer, der über eine Spracherkennungssoftware verfügt. Die Mikrophoneinheit und der Computer können drahtlos miteinander verbunden sein.

Auch die DE 196 18 327 A1 beschreibt ein Diktiersystem mit einer Diktiereinheit und einer davon räumlich getrennten zentralen Aufzeichnungseinheit. Die Diktiereinheit kann drahtlos mit der zentralen Aufzeichnungseinheit verbunden sein. Der DECT-Standard wird erwähnt.

Die DE 195 31 415 A1 beschreibt ein Informationssystem für Kraftfahrzeuge, das ebenfalls den DECT-Standard verwendet. Eine sprachgestützte Notizblockfunktion erlaubt die direkte Sprachaufnahme und Digitalisierung von Informationen, die dann über eine DECT-Schnittstelle an einen Mikroprozessor weitergeleitet und dort gespeichert werden.

Diese Systeme weisen jedoch den Nachteil auf, dass die verwendeten Einrichtungen technisch aufwendige Sonderanfertigungen darstellen, die zu einem hohen Aufwand für die Diktiereinrichtung und somit zu hohen Kosten führen.

Der Erfindung liegt daher die Aufgabe zugrunde, eine Diktiervorrichtung anzugeben, die in einfacher und kostengünstiger Weise eine sofortige Sprachverarbeitung ermöglich, ohne den Benutzer an einen bestimmten Standort zu binden.

Diese Aufgabe wird erfindungsgemäß durch die Gegenstände der unabhängigen Patentansprüche gelöst.

Durch die schnurlose Anbindung des Handgeräts an die Sprachverarbeitungseinrichtung (z.B. den Personalcomputer) kann sich der Benutzer während des Diktats frei bewegen. Beispielsweise kann das Diktat aus größerer Distanz, etwa in einem Konferenzraum, erfolgen, während sich die Sprachverarbeitungseinrichtung z. B. in einem Sekretariatsraum befindet. Trotz der Ortsungebundenheit ermöglicht die erfindungsgemäße Diktiervorrichtung die simultane Sprachverarbeitung, so dass der fertig prozessierte Text am Ende des Diktats bereits vorliegt.

Ein weiterer Vorteil der Erfindung liegt darin, dass alle hardware- und softwareintensiven Einrichtungen vorzugsweise in einer zentralen Sprachverarbeitungseinrichtung lokalisiert sind. Somit kann die Diktiervorrichtung leicht auf einen Mehranwenderbetrieb umgerüstet werden, indem lediglich zusätzliche und einfach ausgelegte Handgeräte (vorzugsweise Standard-Handgeräte) in den Funkkontakt mit der Sprachverarbeitungseinrichtung gebracht werden. Die Erfindung führt somit insbesondere im Mehrbenutzerbetrieb zu einer beträchtlichen Kostenreduktion.

Bevorzugte Ausgestaltungen der Erfindung sind in den Unteransprüchen angegeben.

Wird die schnurlose Übertragung des elektrischen Sprachsignals auf der Grundlage des europäischen Funkstandards DECT durchgeführt, so wird ein weitverbreiteter Standard verwendet, der es gestattet, zahlreiche vorgefertigte Bauteile für die Diktiervorrichtung bzw. Standard-DECT-Handgeräte zu verwenden. Hierdurch erfolgt eine weitere Kostenreduktion. Zusätzlich wird ein hoher Kompatibilitätsgrad erzielt, der es beispielsweise ermöglicht, Handgeräte verschiedener Produktionsserien oder Hersteller mit einer einzelnen Sprachverarbeitungseinrichtung zu verbinden. Ähnliche Vorteile ergeben sich ebenfalls bei Anwendung der weiteren in den Unteransprüchen angegebenen Funkstandards.

Wird das 64 kbit/s-PCM-Signal, also das direkt gewandelte 3,2 kHz-Sprachsignal, direkt an die Spracherkennung geleitet, so wird hierdurch in vorteilhafter Weise die zweifache D/A-A/D-Wandlung vermieden. Dies führt zu einer Erhöhung der Sprachqualität und somit zu einer Reduzierung der Fehlerrate bei der Spracherkennung und Textverarbeitung. Insbesondere können die bereits im Funkstandard integrierten und hochwertigen Fehlerkorrekturmechanismen verwendet werden, so dass der Aufwand und die Systemkosten reduziert werden.

Je nach Ausstattung der Sprachverarbeitungseinrichtung können Einzelbenutzerbetrieb (Single User) oder Mehrbenutzerbetrieb (Multi User) realisiert werden. Zellulare Funksysteme erlauben in der Regel immer den Mehrbenutzerbetrieb, so dass die Systemeigenschaft "Mehrbenutzer" in der Regel nur von der Ausstattung der Sprachverarbeitungseinrichtung abhängig ist.

Ein Einzelbenutzerbetrieb (Single-User-Konfiguration) ist besonders bei einer eingeschränkten Hardwareausstattung der Sprachverarbeitungseinrichtung vorteilhaft, da in diesem Fall dennoch eine sichere Spracherkennung und Textverarbeitung sichergestellt ist. Ein Mehrbenutzerbetrieb (Multi-User-Konfiguration) gestattet demgegenüber in vorteilhafter Weise das gleichzeitige Diktat mehrerer Anwender.

Wird die Sprachverarbeitungseinrichtung im Single-Tasking-Modus betrieben, so können mehrere Diktieraufträge angenommen werden, obwohl die Hardwareausstattung der Sprachverarbeitungseinrichtung eine gleichzeitige Verarbeitung nicht zulässt. Demgegenüber führt ein Betrieb im Multitasking-Modus bei einer ausreichender Ausstattung zu dem weiteren Vorteil, dass die Spracherkennungs- und Textverarbeitungsergebnisse aller Benutzer unmittelbar nach dem Diktat vorliegen.

Erhält der Benutzer beim Diktat Statusmeldungen, so bringt dies den weiteren Vorteil mit sich, dass etwa auftretende Fehler bei der Speicherung, Spracherkennung oder Textverarbeitung noch während des Diktats vom Benutzer erkannt und korrigiert werden können. In diesem Fall besitzt das Handgerät eine Einrichtung zum Empfang und zur Wiedergabe von Daten bzw. Text und wird im Echomode betrieben.

Ist die Diktiervorrichtung zur Entgegennahme von Steuerinformationen in gesprochener Form eingerichtet, so wird hierdurch die Benutzerfreundlichkeit weiter erhöht. Des weiteren sind hierfür vorteilhafterweise keine zusätzlichen Maßnahmen am Handgerät notwendig. Demgegenüber ist das Vorhandensein spezifischer Tasten am Handgerät zur Kennzeichnung von Steuerinformationen vorteilhaft, um Fehlinterpretationen vorzubeugen.

Die Verwendung eines schnurlosen Datenterminals desselben Funkstandards ermöglicht in vorteilhafter Weise die Übertragung des verarbeiteten Textes an den Benutzer in besonders komfortabler Weise. Die Benutzerfreundlichkeit wird weiterhin durch einen berührungssensitiven Bildschirm für die Eingabe von Steuerinformationen und für die Wiedergabe (Rückübertragung) der verarbeiteten Texte sowie durch eine Sprachfunktionalität mit einer Freisprecheinrichtung zum Aufsprechen der Texte erhöht.

Die Erfindung wird nun unter Bezugnahme auf die beigefügten Zeichnungen näher erläutert:
FIG. 1a zeigt ein herkömmliches Hand- oder Tischdiktiergerät mit Wechselspeichermedium;
FIG. 1b zeigt ein herkömmliches Hand- oder Tischdiktiergerät mit Festspeicher;
FIG. 2a zeigt eine herkömmliche Sprachverarbeitungseinrichtung zum Betrieb mit einem Diktiergerät nach FIG. 1a;
FIG. 2b zeigt eine herkömmliche Sprachverarbeitungseinrichtung zum Betrieb mit einem Diktiergerät nach FIG. 1b;
FIG. 2c zeigt eine herkömmliche Sprachverarbeitungseinrichtung, die von einem Handgerät nach FIG. 1a oder 1b ein analoges Sprachsignal empfängt;
FIG. 3 zeigt einen PC mit Spracherkennungssoftware;
FIG. 4a zeigt ein erstes Ausführungsbeispiel einer erfindungsgemäßen Diktiervorrichtung;
FIG. 4b zeigt eine Modifikation des ersten Ausführungsbeispiels mit Echofunktion;
FIG. 5 zeigt eine besondere Ausführung einer Sprachverarbeitungseinrichtung zur Verwendung in einer Diktiervorrichtung gemäß der vorliegenden Erfindung;
FIG. 6 zeigt ein zweites Ausführungsbeispiel der vorliegenden Erfindung; und
FIG. 7 zeigt ein drittes Ausführungsbeispiel einer erfindungsgemäßen Diktiervorrichtung.

Bevorzugte Ausgestaltungen der Erfindung werden nun unter Bezugnahme auf die Figuren näher erläutert.

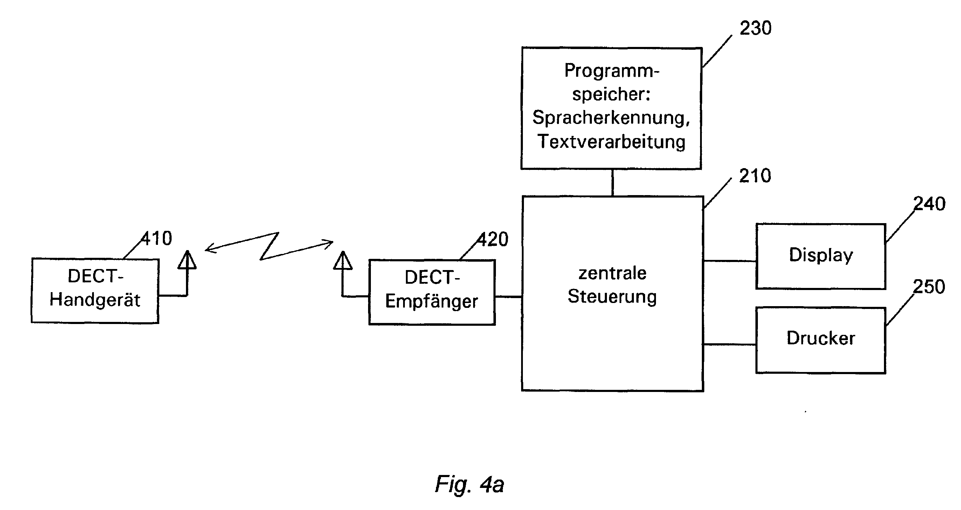

FIG. 4a zeigt eine erste bevorzugte Ausgestaltung einer erfindungsgemäßen Diktiervorrichtung bestehend aus einem handelsüblichen oder speziellen (mit Textverarbeitung ausgestatteten) DECT-Handgerät 410 und einer Sprachverarbeitungseinrichtung. Die Sprachverarbeitungseinrichtung umfasst eine zentrale Steuerung 210, einen Programmspeicher 230, ein Display 240 und einen Drucker 250. Femer ist mit der zentralen Steuerung 210 ein DECT-Empfänger 420 verbunden. Der DECT-Empfänger 420 kann als integrierte PC-Funkkarte oder als externes Funkmodem mit Standardschnittstelle, z.B. USB, RS232C etc., ausgestaltet sein und arbeitet als DECT-Basisstation, also im FP-Mode (Fixed-Part-Betriebsart) des verwendeten Funkstandards.

Der europäische Funkstandard DECT (GAP für Telefonie und DPRS für Datendienste) wird heute bevorzugt in schnurlosen Systemen für Telefonie und Datendienste eingesetzt. Die Hauptanwendungsgebiete liegen in der Verbindung von Haustelefonen mit dem Festnetz über eine Basisstation, die über ein Kabel mit dem Telefonfestnetz (ISDN oder PSTN oder xDSL) verbunden ist. Ein weiterer bisheriger Anwendungsbereich sieht den Anschluss von PCs, die DECT-PC-Karten enthalten, an DECT-Basisstationen vor, so dass über den PC Onlinedienste verfügbar sind.

In dem Ausführungsbeispiel von FIG. 4a wird der DECT-Standard nun zur schnurlosen Übertragung von Sprachsignalen (GAP-Standard) in einer Diktiervorrichtung verwendet. Die Sprachverarbeitungseinrichtung verfügt daher über eine DECT-PC-Karte 420, die als integrierte PC-Funkkarte oder als externes Funkmodem (mit Standardschnittstelle, z.B. USB, RS232C etc., ausgestaltet sein kann, und die DECT-Software wird in dieser Anwendung vorzugsweise im Basisstationsmodus (= FP-Mode, Fixed-Part-Betriebsart) betrieben. Der als Sprachverarbeitungseinrichtung arbeitende PC verhält sich dann zusätzlich wie eine handelsübliche DECT-Basisstation (nach dem GAP- oder DPRS-Standard), in die handelsübliche DECT-Handgeräte eingebucht werden können. Die anderen Funktionen des PC's bleiben vorhanden und betriebsbereit, z.B. Textverarbeitung, Spracherkennungsprogramme, Netzwerkkommunikation und Festnetzkommunikation, da die Basisstationskommunikation vorzugsweise im Hintergrund abläuft. Der Betriebsradius ergibt sich aus dem DECT-Standard zu 300 m im Freien und etwa 50 m innerhalb von Gebäuden.

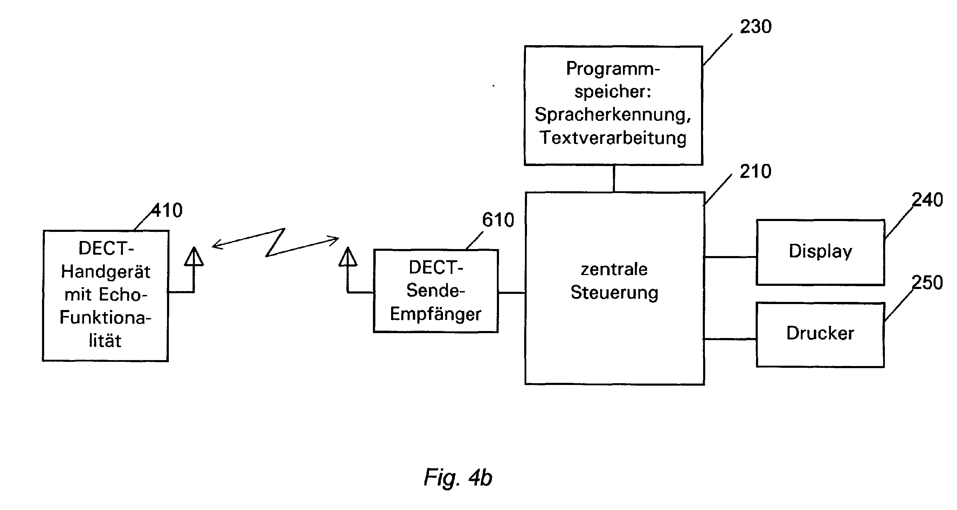

Bei Anwahl der PC-Basisstation durch ein DECT-Handgerät können nun die Sprachdaten an den PC schnurlos übertragen werden. Die Wandlung der digitalen Sprachinformationen mit 32 kbit/s Datenrate wird über einen ADPCM-Codec durchgeführt. ADPCM (Adaptive Differential Pulse Code Modulation) ist eine Form der Pulscodemodulation PCM (Pulse Code Modulation), die ein digitales Signal mit einer geringeren Bitrate als bei der Standard-PCM-Modulation erzeugt. Der ADPCM-Codec ist der Standard-Codec für DECT-Dienste und ist Bestandteil der PC-Karte. In dem Ausführungsbeispiel von FIG. 4 wird der daraus entstehende 64 kbit/s-PCM-Datenstrom, also das digital gewandelte 3,2 kHz-Sprachsignal, von der zentralen Steuerung 210 entgegengenommen und einer Spracherkennung unterworfen.

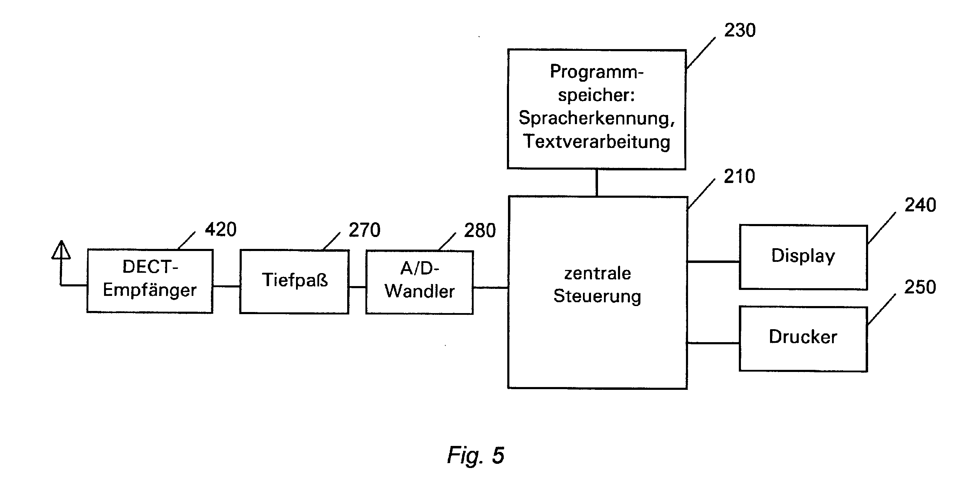

In einem weiteren bevorzugten Ausführungsbeispiel, das in FIG. 5 gezeigt ist, wird in der PC-Basisstation der 64 kbit/s-PCM-Datenstrom über einen im DECT-Empfänger 420 befindlichen D/A-Wandler in ein analoges Sprachsignal mit einer Bandbreite von 3,15 kHz, der Telefonbandbreite, umgewandelt. Der D/A-Wandler hat bevorzugterweise eine Auflösung von 8 Bit. Der als Basisstation arbeitende PC enthält dann vorzugsweise einen Tiefpass 270 sowie einen A/D-Wandler 280.

Die erfindungsgemäße Diktiervorrichtung kann in verschiedenen Konfigurationen und Modi betrieben werden: in Einzel- und Mehrbenutzerkonfigurationen und im Single-Tasking- und Multitasking-Modus.

In der Einzelbenutzer-Single-Tasking-Konfiguration kann zur selben Zeit nur ein Anwender das schnurlose Diktiergerät benutzen. Bei Anruf des ersten Anwenders geht dieser sofort "online" und kann diktieren, wobei das Diktat sofort in lesbaren Text umgewandelt wird. Ein anderer Anwender, der versucht, sich in die Basisstation einzubuchen, erhält solange einen Besetztton, bis die erste Anwendung beendet ist.

In der Mehrbenutzer-Single-Tasking-Konfiguration können mehrere Anwender das schnurlose Diktiersystem benutzen, die Spracherkennung und Textverarbeitung findet jedoch nur für den ersten Anwender simultan statt. Bei Anruf des ersten Anwenders geht dieser sofort online und kann diktieren, wobei das Diktat sofort in lesbaren Fließtext umgewandelt wird. Ein nachfolgender Anwender erhält dann keinen Besetztton, sondern kann ebenfalls sofort diktieren. Die Sprachsignale des zweiten und aller nachfolgenden Anwender werden zwischengespeichert und erst nach Beendigung der vorrangigen Anwendungen (d.h. "offline") in lesbaren Text umgewandelt wird. Bei Einsatz von DECT als Funksystem können bis zu zwölf parallele Diktieraufträge (ein Auftrag online und elf Aufträge offline) bearbeitet werden. Ein dreizehnter zeitgleicher Anwender erhält dann wiederum einen Besetztton, bis eine der vorrangigen zwölf Anwendungen beendet ist.

Wird die Basisstation im Mehrbenutzer-Multitasking-Modus betrieben, beispielsweise unter Verwendung eines Multitasking-Betriebssystems, wie etwa Microsoft Windows, OS/2 oder Linux, können mehrere zeitgleiche Diktate aufgenommen und verarbeitet werden. Bei Anruf des ersten Anwenders geht dieser sofort online und kann diktieren, wobei sein Diktat in lesbaren Text umgewandelt wird. Nachfolgende Anwender erhalten keinen Besetztton sondern können ebenfalls sofort diktieren, wobei deren Sprachsignale ebenfalls online in lesbare Texte umgewandelt werden. Bei Einsatz des DECT-Funksystems würde jedoch wiederum ein dreizehnter Anwender einen Besetztton erhalten, da die Anzahl parallel bearbeitbarer Aufträge auf zwölf begrenzt ist.

In jeder der genannten Konfigurationen sind die Basisstation (im folgenden auch als DECT-Basisstation, PC-Basisstation oder Sprachverarbeitungseinrichtung bezeichnet) sowie die Handgeräte in bevorzugten Ausgestaltungen mit Einrichtungen ausgestattet, die es erlauben, dass die Basisstation an die DECT-Endgeräte Statusmeldungen als lesbare Zeichen zurückmeldet. Beispiele solcher Statusmeldungen sind "Anwahl Diktat - bitte warten..." bei der Einbuchung des schnurlosen Diktiergeräts, "Bitte Diktat..." bei der Bereitschaft der Basisstation zum Diktat, "Diktat beendet" nach Beendigung des Diktats sowie "Besetzt - bitte warten..." im Falle eines Besetzttons.

In einer weiteren bevorzugten Ausführungsform kann die DECT-Basisstation der erfindungsgemäßen Diktiervorrichtung gesprochene Steuerinformationen (über eine Spracherkennungseinrichtung des PC's) verarbeiten, wie etwa "Diktat", "Absatz", "Fettdruck", "Unterstreichen", "Korrektur", "Ende Diktat", "Drucken", usw. Hierzu wird eine unverwechselbare Kennung vorausgesprochen oder eine bestimmte Taste am Handgerät vorher gedrückt, z.B. "*" oder "#". In einem alternativen Ausführungsbeispiel können statt gesprochener Steuerinformationen verschiedenen Tasten verschiedene Steuerbefehle direkt zugeordnet werden. Zur Kennzeichnung als Steuerinformation wird beispielsweise das Zeichen "*" vorangestellt. Der Befehl "Diktat" entspricht dann z.B. "*1", "Absatz" entspricht dann z.B. "*2", etc.

Die PC-Basisstation einer weiterhin bevorzugten Ausgestaltung (FIG. 4b) schickt die online umgesetzten Texte Wort für Wort an das Handgerät zurück, so dass der Anwender die gesprochenen Texte am Display des Handgeräts als Fließtext mitverfolgen kann. Der Umfang des in einem solchen Echomodus angezeigten Textes hängt von der Größe des Displays ab. Bevorzugterweise werden dem Benutzer die letzten zehn Worte angezeigt.

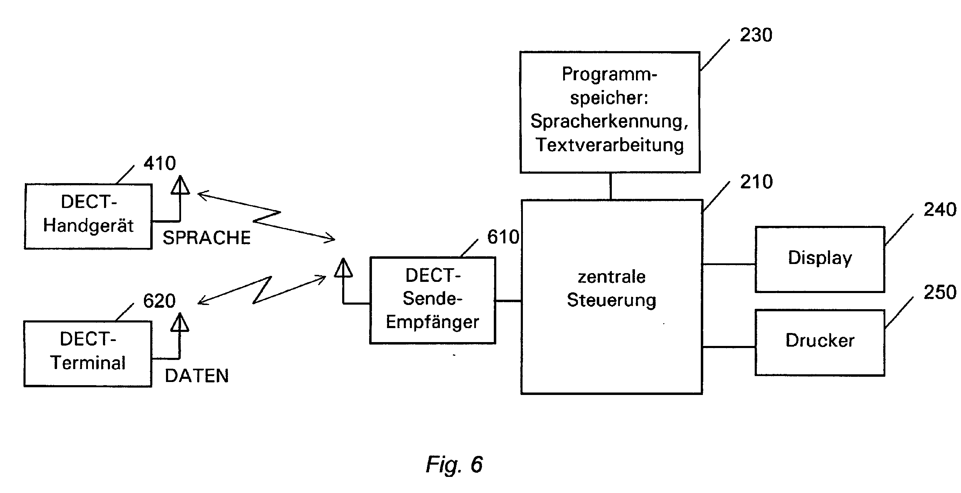

In FIG. 6 ist ein weiteres bevorzugtes Ausführungsbeispiel einer erfindungsgemäßen Diktiervorrichtung gezeigt. Es wird hierin ein DECT-basiertes Datenterminal als schnurloses Terminal für Kontrollzwecke eingesetzt. Solche Datenterminals werden auch als WebPad bezeichnet, wenn sie eine Internet-Funktionalität aufweisen. Mit Hilfe des Datenterminals 620 wird dem Benutzer bevorzugterweise eine Text- und Sprachgeschwindigkeitskontrolle während des Diktats ermöglicht. Die PC-Basisstation baut hierzu eine zusätzliche DECT-Verbindung zum DECT-Datenterminal auf und überträgt die verarbeiteten Texte online an das DECT-Terminal. In einer bevorzugten Ausgestaltung weist das DECT-Terminal 620 einen berührungssensitiven Bildschirm (Touchscreen) auf, so dass die oben erwähnten Steuerinformationen auch über diesen Display eingegeben werden können.

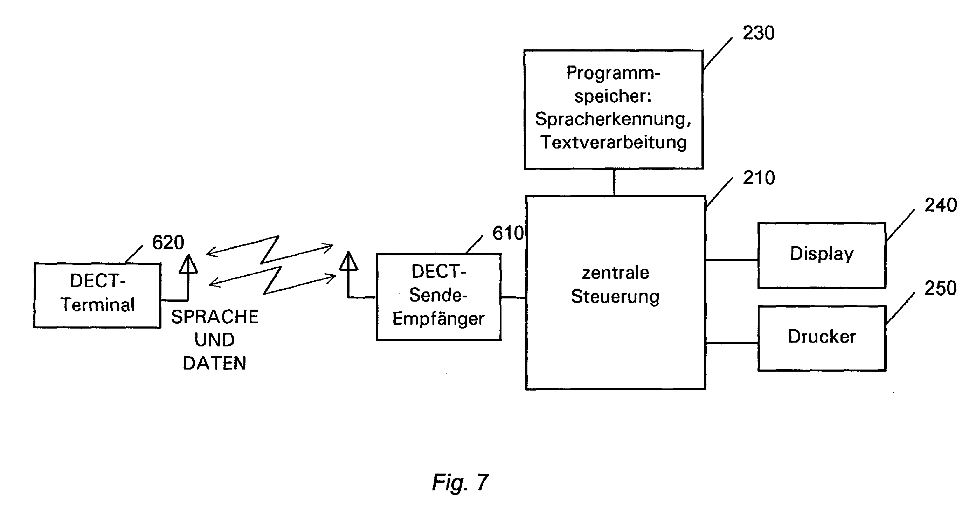

Eine weitere bevorzugte Ausgestaltung der erfindungsgemäßen Diktiervorrichtung ist in FIG. 7 gezeigt. Es wird hier ein DECT-basiertes Terminal 620 eingesetzt, das gleichzeitig sowohl eine Telefonverbindung zur Sprachübermittlung als auch eine Datenverbindung zum PC unterhält. Das DECT-Terminal weist hierzu bevorzugt eine Freisprecheinrichtung für die Spracheingabe und ein großes Display für die Textwiedergabe auf. Die PC-Basisstation verwendet einen zusätzlichen DECT-Kanal zum Datenteil des DECT-Terminals und überträgt die verarbeiteten Texte an das DECT-Terminal zu Kontrollzwecken durch den diktierenden Benutzer. Hierdurch wird das DECT-Terminal 620 zum universellen Diktiergerät, wobei die Datenverarbeitung in der PC-Basisstation durchgeführt wird. Besitzt das DECT-Terminal einen Touchscreen, so können die obengenannten Steuerinformationen wiederum über den Display eingegeben werden.

In den obengenannten bevorzugten Ausführungen der Erfindung wurde der DECT-Funkstandard verwendet, der auch gerade in Büros vermehrt eingesetzt wird, so dass eine Neuanschaffung einer Diktiereinrichtung oftmals entfallen wird. Alternativ hierzu können auch Dual-Mode-Telefone DECT/GSM, GSM-Telefone (HSCDS, GPRS, UMTS) sowie Endgeräte eingesetzt werden, die künftigen Funkstandards genügen, wie Bluetooth und HomeRF (SWAP) oder 802.11 (WLAN).

Da sich die PC-Basisstation wie eine Standard-DECT-Basisstation verhält, können mit den angemeldeten DECT-Handgeräten auch alle internen Telefonfunktionen (anrufen, makeln, weiterverbinden, Konferenz ...) genutzt werden. Dadurch erhält man einen betrieblichen Mehrwert der Anlage als Inhaus-Telefonsystem. Das Telefonsystem und die Diktiereinrichtung können dabei zeitgleich verwendet werden.

Verfügt die PC-Basisstation zusätzlich über einen Festnetzanschluß (eingebautes Modem für PSTN, ISDN, xDSL), so können die Handgeräte zusätzlich auch mit allen Telefonfunktionen für externe Telefonate verwendet werden. Dadurch erhält man einen betrieblichen Mehrwert der Anlage als komfortables PC-gesteuertes Komforttelefonsystem mit den zusätzlichen Merkmalen der Telefonbuchverwaltung und PC-gesteuerter Telefonate (Anwahl, Annahme, Weitervermittlung, Konferenzschaltung, individuelle Gebührenerfassung, etc.).

Wie aus der vorhergehenden Beschreibung ersichtlich, erfolgt die schnurlose Übertragung bei der erfindungsgemäßen Diktiervorrichtung vorzugsweise auf der Grundlage des DECT-Funkstandards. Andere bevorzugte Übertragungsmodi verwenden den Dual-Modus DECT/GSM, den GSM-Modus, den Bluetooth-Funkstandard, den Standard HomeRF (SWAP) oder den Standard 802.11 (WLAN).

Die Sprachverarbeitung erfolgt vorzugsweise femgesteuert über Spracherkennung ohne Benutzereingriff an der Sprachverarbeitungseinrichtung.

Die erfindungsgemäße Diktiervorrichtung weist vorzugsweise in der Sprachverarbeitungseinrichtung einen A/D-Wandler auf. Weiterhin umfasst die Sprachverarbeitungseinrichtung vorzugsweise keinen D/A-Wandler zur Wandlung von Sprachsignalen vor deren Sprachverarbeitung

Die Sprachverarbeitungseinrichtung der erfindungsgemäßen Diktiervorrichtung weist vorzugsweise Mittel zum Senden von Statusmeldungen an das Handgerät auf und das Handgerät umfasst Mittel zur Ausgabe der Statusmeldungen an den Benutzer. Ferner verfügt die Sprachverarbeitungseinrichtung vorzugsweise über Mittel zum Erkennen gesprochener Steuerinformationen. Das Handgerät verfügt vorzugsweise über wenigstens eine gesonderte Taste, die vom Benutzer vor der Eingabe gesprochener Steuerinformationen zur Kennzeichnung derselben gedrückt wird. Weiterhin ist das Handgerät vorzugsweise als Datenterminal mit einem berührungssensitiven Bildschirm ausgeführt.

Die erfindungsgemäße Diktiervorrichtung umfasst ferner vorzugsweise ein Datenterminal, das mit der Sprachverarbeitungseinrichtung in schnurlosem Kontakt steht zur Übermittlung von Kontrollinformationen an die Sprachverarbeitungseinrichtung. Das Datenterminal kann vorzugsweise einen berührungssensitiven Bildschirm aufweisen.

Ferner ist das Handgerät mit der Sprachverarbeitungseinrichtung vorzugsweise über zwei schnurlose Übertragungskanäle verbunden, von denen einer zur Übermittlung von Sprachdaten und der andere zur Übermittlung von anderen Daten verwendet wird.

In der erfindungsgemäßen Diktiervorrichtung verfügt das Handgerät vorzugsweise über eine Freisprecheinrichtung.

Ein Handgerät für eine erfindungsgemäße Diktiervorrichtung umfasst ein Mikrophon zur Wandlung eines akustischen Sprachsignals in ein elektrisches Sprachsignal und eine Sendeeinheit zur schnurlosen Übertragung des elektrischen Sprachsignals an eine Sprachverarbeitungseinrichtung der Diktiervorrichtung.

## Patentansprüche

1. Diktiervorrichtung, umfassend:
ein Handgerät (410, 620) mit einem Mikrophon zur Wandlung eines akustischen Sprachsignals in ein elektrisches Sprachsignal, und
eine Sprachverarbeitungseinrichtung (210, 230, 240, 250, 610) zur Verarbeitung des elektrischen Sprachsignals,
**dadurch gekennzeichnet, dass**
das Handgerät eine Sendeeinheit und die Sprachverarbeitungseinrichtung eine Empfangseinheit (420, 610) umfassen, die eine schnurlose Übertragung des elektrischen Sprachsignals vom Handgerät zur Sprachverarbeitungseinrichtung gestatten.

2. Diktiervorrichtung nach Anspruch 1, **dadurch gekennzeichnet, dass** das Handgerät als Standard-DECT-Telefon und die Sprachverarbeitungseinrichtung als Personalcomputer ausgeführt ist, der die Funktion einer DECT-Basisstation übernimmt.

3. Diktiervorrichtung nach Anspruch 2, **dadurch gekennzeichnet, dass** über die Standardtastatur des Handgeräts ein Diktatmodus der Sprachverarbeitungseinrichtung einstellbar ist und/oder Steuersignale zur Textformatierung eingegeben werden können.

4. Diktiervorrichtung nach Anspruch 1, **dadurch gekennzeichnet, dass** das Handgerät als DECT-WebPad ausgelegt ist, das eingerichtet ist zur Sprach- und Datenübertragung.

5. Diktiervorrichtung nach einem der Ansprüche 1 bis 4, **dadurch gekennzeichnet, dass** die Sprachverarbeitungseinrichtung eingerichtet ist zur zentralen Speicherung der elektrischen Sprachsignale.

6. Diktiervorrichtung nach einem der Ansprüche 1 bis 5, **dadurch gekennzeichnet, dass** die Sprachverarbeitungseinrichtung eingerichtet ist zur Übersetzung der elektrischen Sprachsignale in Fließtext.

7. Diktiervorrichtung nach einem der Ansprüche 1 bis 6, **dadurch gekennzeichnet, dass** die Diktiervorrichtung in einer Einzelbenutzerkonfiguration betrieben werden kann, in der die Sprachverarbeitungseinrichtung ein elektrisches Sprachsignal von nur einem Benutzer verarbeiten kann.

8. Diktiervorrichtung nach einem der Ansprüche 1 bis 7, **dadurch gekennzeichnet, dass** die Diktiervorrichtung in einer Mehrbenutzerkonfiguration betrieben werden kann, in der die Sprachverarbeitungseinrichtung elektrische Sprachsignale mehrerer Benutzer verarbeiten kann.

9. Diktiervorrichtung nach einem der Ansprüche 1 bis 8, **dadurch gekennzeichnet, dass** die Diktiervorrichtung in einem Single-Tasking-Modus betrieben werden kann, die eine Speicherung elektrischer Sprachsignale mehrerer Benutzer aber keine gleichzeitige Spracherkennung erlaubt.

10. Diktiervorrichtung nach einem der Ansprüche 1 bis 9, **dadurch gekennzeichnet, dass** die Diktiervorrichtung in einem Multitasking-Modus betrieben werden kann, in dem elektrische Sprachsignale mehrerer Benutzer gleichzeitig einer Spracherkennung unterworfen werden können.

11. Diktiervorrichtung nach einem der Ansprüche 1 bis 10, **dadurch gekennzeichnet, dass** das Handgerät und die Sprachverarbeitungseinrichtung zur Durchführung einer Echofunktion eingerichtet sind, die das Ergebnis der Verarbeitung des elektrischen Sprachsignals an das Handgerät zurücksendet.

12. Diktiervorrichtung nach einem der Ansprüche 1 bis 11, **dadurch gekennzeichnet, dass** das Handgerät und die Sprachverarbeitungseinrichtung Mittel zur Durchführung eines Telefonats zwischen dem Handgerät und einem weiteren Handgerät, das in schnurlosem Kontakt zur Sprachverarbeitungseinrichtung steht, umfassen.

13. Diktiervorrichtung nach einem der Ansprüche 1 bis 12, **dadurch gekennzeichnet, dass** die Sprachverarbeitungseinrichtung über einen Telefonfestnetzanschluß verfügt und das Handgerät und die Sprachverarbeitungseinrichtung Mittel zur Durchführung eines Telefonats zwischen dem Handgerät und einem externen Telefon umfassen.

14. Sprachverarbeitungseinrichtung für eine Diktiervorrichtung nach einem der Ansprüche 1 bis 13, umfassend:
eine Empfangseinheit zum Empfangen schnurlos übertragener elektrischer Sprachsignale von einem Handgerät der Diktiervorrichtung, und
Mittel zur Verarbeitung des elektrischen Sprachsignals.
